# EUROPEAN PATENT SPECIFICATION

(11) **EP 2 884 144 B1**
(45) Date of publication and mention of the grant of the patent: **04.01.2017**
(21) Application number: 14198304.9
(22) Date of filing: 16.12.2014
(51) Int. Cl.: F16K 39/06, F16K 5/20

(54) **Valve**
Ventil
Valve

(30) Priority: 16.12.2013 IT BS20130182
(43) Date of publication of application: 17.06.2015
(73) Proprietor: Gemels S.r.l., 24069 Trescore Balneario (BG) (IT)
(72) Inventor: Facchinetti, Marco, 24069 Trescore Balneario, Bergamo (IT)
(74) Representative: Chimini, Francesco

(56) References cited:
- BE-A- 498 186
- FR-A- 857 607

## Description

The present invention relates to an intercepting valve of a fluid, of the type comprising a valve body in which an inlet duct, an outlet duct, and an obturator seat are made between said inlet and outlet ducts, where an obturator is placed in said obturator seat, rotatable between a closed valve position, wherein it prevents the passage of the fluid from said inlet duct to said outlet duct, and an open valve position, wherein it sets said inlet and outlet ducts in fluidic communication.

The valve obturator, which in a usual embodiment is a ball obturator, is supported in the obturator seat by sealing gaskets which prevent leakages of fluid between the inlet and outlet ducts through said seat when the obturator is rotated in the closed position.

In certain applications, the rotation of the valve obturator is usually performed manually by an operator or by means of a servo-mechanism, for example by means of a command device coupled to the obturator through a command shaft.

When the obturator is in the closed position the pressure of the fluid acts on the obturator gasket facing the inlet duct increasing the sealing effect of the gasket but, at the same time, developing a force that counters the rotation of the command device to open the valve and thus said obturator.

In some cases the intercepting valves can remain in the closed position under pressure for a long time; in this scenario, a sticking effect (known in the jargon by "lips sticker" wording) is created between the obturator and the relative gaskets, which entails a torque increase of up to 50% to open the valve. Longer command levers are thus used to increase the opening torque of the valve which however often cause the command shaft to break or cause damage in the coupling area between the shaft and the obturator.

To overcome such drawback, intercepting valves have been proposed, especially in the high-pressure sector, to which a bypass valve of reduced size is applied which, when the obturator valve is in the closed position, can be opened by the operator so as to place the inlet duct of the intercepting valve in communication with the outlet duct so as to release the pressure acting on the obturator. At this point the command lever of the intercepting valve can be manoeuvred with a torque equal to that of a non-pressurised valve.

It is evident that such a technical solution increases the dimensions and components of the valve, with all the relative disadvantages thereof.

In addition, the fact that the operator is required to perform two operations in succession, both during opening and closing, makes work on the valve more difficult and less rapid. For example, it may happen that the bypass valve is left open by mistake, leading to the erroneous belief that there is a leak in the system. Intercepting valves according to the preamble of appended claim 1 are known from FR 857 607 A2 and BE 498 186 A.

The purpose of the present invention is to propose an intercepting valve of a fluid, particularly for high pressures, which can be operated with a reduced torque on the command device and which is able at the same time to overcome the drawbacks complained of above.

Such purpose is achieved by an intercepting valve according to claim 1. The dependent claims describe preferred embodiments of the invention.

The basic idea of the present invention is to make a bypass duct intercepted by a bypass valve in the valve body of the intercepting valve which is adjustable in rotation by the same command device which commands the valve obturator and simultaneously to the opening/closing of the valve obturator. In a first rotation phase of the command device only the bypass obturator is actuated, opening the bypass duct while the valve obturator is still closed. In a second rotation phase of the command device, both the obturators are rotated. At the end of the rotation of the command device, the obturator valve is completely open while the bypass obturator is completely closed.

Thanks to the fact that the through cross-sections of the bypass duct and relative sealing gaskets are considerably smaller than those of the main passage, the desired effect is achieved of releasing the pressure acting on the valve obturator downstream of the valve through the bypass duct, applying a reduced torque to the command device.

Further characteristics and advantages of the invention will, in any case, be evident from the description given below of its preferred embodiments, made by way of a non-limiting example with reference to the appended drawings, wherein:

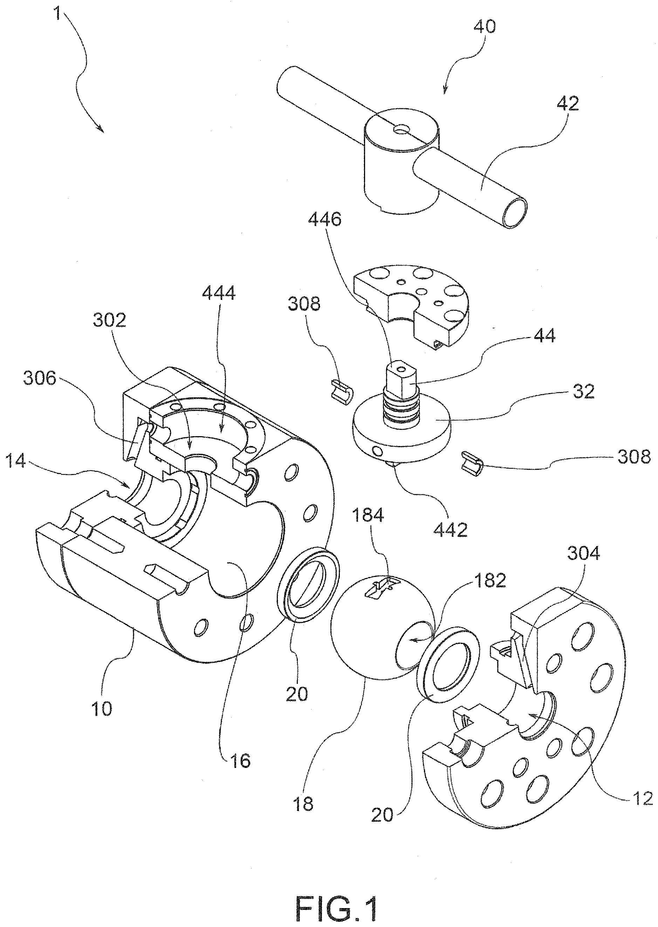

- Figure 1 shows a cross-section of the intercepting valve according to the invention, in separate parts;

- Figures 2, 3 and 4 show a cross-section of the assembled valve in the closed valve, valve with bypass duct open and open valve positions respectively;

- Figures 2a, 3a and 4a show, in a perspective view, the assembly of the valve obturator and of the bypass obturator with the respective gaskets, in the closed valve, valve with bypass duct open and valve open positions respectively;

- Figure 2b, 3b and 4b are horizontal cross-sections of the assembly in the previous drawings at the level of the coupling means of the command shaft to the valve obturator;

- Figures 5, 6 and 7 are axial cross-sections of the intercepting valve in the closed valve, valve with bypass duct open and valve open positions respectively, including an indication of the fluid flow in the valve.

- Figures 5a, 6a and 7a are plan views from above of the valve in the closed valve with bypass duct open and valve open positions respectively; and

- Figures 8 and 8a show in an exploded perspective view and in axial cross-section an intercepting valve according to the invention, in an embodiment variant.

In said drawings, reference numeral 1 globally denotes an intercepting valve of a fluid according to the invention.

In a general embodiment, the valve 1 comprises a valve body 10 in which an inlet duct 12 and an outlet duct 14 for the fluid are made. For example, said inlet and outlet ducts 12, 14 are coaxial to each other. In the valve body 10, an obturator seat 16 is made between the inlet 12 and outlet 14 ducts in which a valve obturator 18 is housed. The valve obturator 18 is rotatable between a closed valve position, in which it prevents the passage of the fluid from said inlet duct 12 to said outlet duct 14, and an open valve position, in which it places said inlet 12 and outlet 14 ducts in fluidic communication.

In one embodiment, the valve obturator 18 is a ball obturator.

The valve obturator 18 is crossed by a valve obturator passage 182 which, when the valve is in the open position, is aligned with the inlet 12 and outlet 14 ducts. Said ducts 12, 14 and said valve obturator passage 182 form a main passage for the fluid. In one embodiment, said main passage extends along a main axis X orthogonal to the rotation axis Y of the valve obturator.

The valve obturator 18 is supported in the obturator seat 16 by means of sealing gaskets 20, e.g. toroidal in shape, respectively facing the inlet duct 12 and outlet duct 14.

According to one aspect of the invention, the valve 1 comprises a bypass duct 30 made in the valve body 10 to fluidically connect the inlet duct 12 and the outlet duct 14 without passing through the valve obturator 18.

In said bypass duct 30 a bypass obturator 32 is placed, rotatable between a closed position of said bypass duct 30, and an open position of said bypass duct 30.

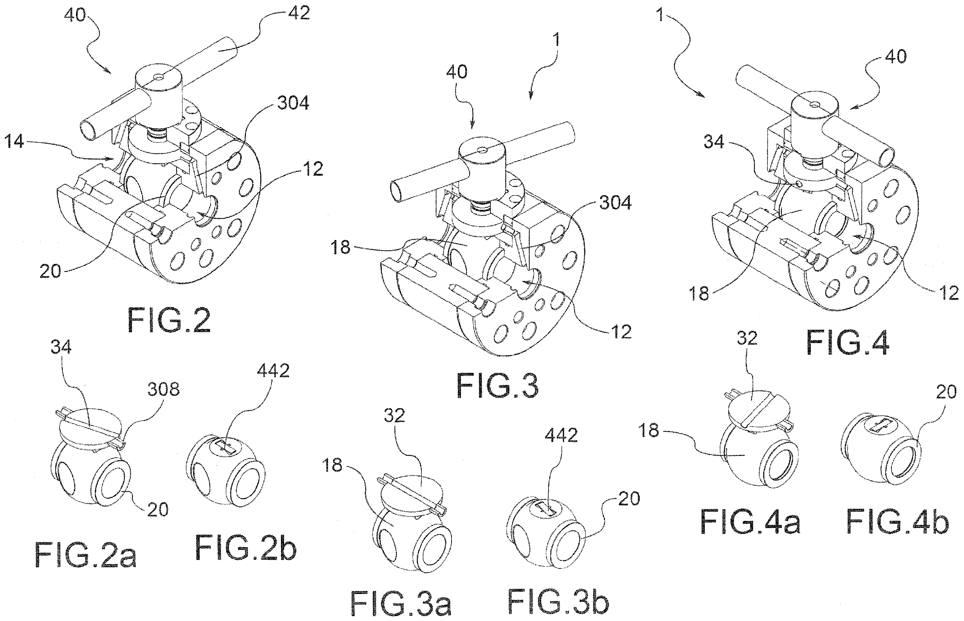

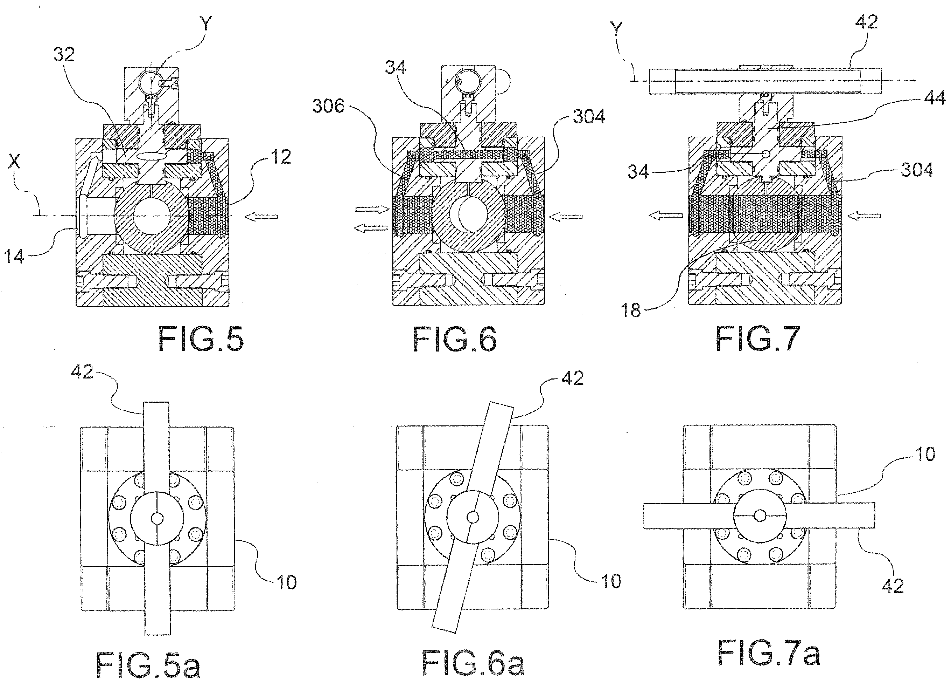

The valve 1 comprises a command element 40 suitable to cause a rotation both of the valve obturator 18 and of the bypass obturator 32. This command element 40 can be rotated between a first position, in which both the valve obturator 18 and the bypass obturator 32 are in the closed position (figures 2 and 5), and a second position, in which the valve obturator 18 is in the open position and the bypass obturator 32 is in the closed position figures 4 and 7), passing through an intermediate position, in which the valve obturator 18 is still in the closed position while the bypass obturator 32 is in the open position (figures 3 and 6).

In particular, in a first phase of rotation of the command element 40, in which the transition from the first position (closed valve) to the intermediate position (bypass duct open) takes place, the command element 40 causes the rotation of the bypass obturator 32 only. In a second phase of rotation of the command element 40, in which the transition from the intermediate position to the second position (valve open) takes place, the command element 40 causes the rotation both of the valve obturator 18 and of the bypass obturator 32. It should be noted that, as shown in figures 4, 4a and 7, upon reaching the second position the bypass duct 30 is closed again and the valve works normally in its open configuration.

In more detail, the command element 40 is integral in rotation with the bypass obturator 32 and engages the valve obturator 18 angularly only upon reaching the intermediate position.

Advantageously, the bypass duct 30 has a through cross-section of the fluid smaller than the through cross-section of the inlet duct 12. Therefore, the first phase of rotation of the command element 40, which concerns only the bypass obturator 32, requires a torque on the command element 40 significantly lower than the torque needed to rotate the valve obturator 18.

In a preferred embodiment, the command element 40 comprises a rotatable command device 42, such as a lever, and a command shaft 44 which transmits the rotation of said command device to the valve obturator 18. Advantageously, the bypass obturator 32 is made in said command shaft 42. For example, the command shaft 44 and bypass obturator 32 are made integrally in a single body.

In a preferred embodiment, the command shaft 44 has a (lower) end portion 442 having a substantially rectangular cross section housed in a shaft seat 184 made in the valve obturator 18. Said end portion 442 is free to rotate in said shaft seat 184 by an angle equal to the shift from the first position to the intermediate position. For example, the shaft seat 184 consists of a recess made in the valve obturator 18 and delimited by inclined walls.

In one embodiment, the command shaft 44 is housed in a shaft seat 444 made in the valve body 10. Said shaft seat 444 delimits an intermediate portion 302 of the bypass duct 30. Said intermediate portion 302 of the bypass duct houses the bypass obturator 32. For example, said intermediate portion 302 of the bypass duct 30 extends in a direction substantially orthogonal to the rotation axis Y of the command shaft 44. Moreover, said intermediate portion 302 of the bypass duct 30 communicates fluidically with an inlet portion 304 of the bypass duct 30 made in the valve body 10 and with an outlet portion 306 of the bypass duct 30, made in the valve body 10.

The bypass obturator 32 interfaces with said inlet 304 and outlet 306 portions of the bypass duct 30 by means of bypass gaskets 308. It is to be noted that the contact surface of said bypass gaskets 308 with the bypass obturator 32 is considerably smaller than the contact surface of the gaskets of the valve obturator 20. The sticking effect between the bypass gaskets 308 and the bypass obturator 32 is thus considerably reduced compared to that generated between the valve obturator 18 and relative gaskets 20.

As mentioned above, the command shaft 44 comprises a lower portion 442 coupling to the valve obturator 18, an upper portion 446 coupling to the command device 42, and an intermediate portion which forms the bypass obturator 32 and which is housed in said intermediate portion 302 of the bypass duct 30. A transversal bypass passage 34 is made in the bypass obturator 32.

In one advantageous embodiment, the bypass obturator 32 is disc-shaped with its rotation axis coinciding with the rotation axis Y of the command element. Such disc shape facilitates the guided rotation of the command element, which the bypass obturator is part of, and at the same time enables a limitation of the dimensions of the valve in height.

When the valve is in the closed position (figures 2 and 5), the transversal bypass passage 34 is offset from the inlet 304 and outlet 306 portions of the bypass duct 30, and the latter is thus closed (figure 2a).

After rotating the command element by a certain angle, for example approximately 15°, the bypass passage 34 is aligned with the inlet 304 and outlet 306 portions of the bypass duct 30, and the latter is thus opened (figure 3a). In this position of the command element, the valve obturator 18 is still in its starting position of valve closed. The pressure of the fluid acting on the valve obturator can be released downstream of the valve obturator, as shown in figure 6, through the bypass duct 30.

At this point the bypass duct has exhausted its task and the valve obturator 18 can be rotated with a significantly lower torque than would be needed in the presence of pressure in the inlet duct 12 only.

Continuing to rotate the command element 40 causes the rotation both of the valve obturator 18 and of the bypass obturator 32.

At the end of the rotation, for example equal to 90°, of the command element 40 (figures 4, 7, 7a), the valve obturator 18 is in the open position of the main passage, while the bypass passage 442 is offset again (substantially orthogonal) to the inlet 304 and outlet 306 portions of the bypass duct 30.

A person skilled in the art may make modifications and adaptations to the embodiments of the intercepting valve according to the invention, replacing elements with others functionally equivalent so as to satisfy contingent requirements while remaining within the sphere of protection of the following claims.

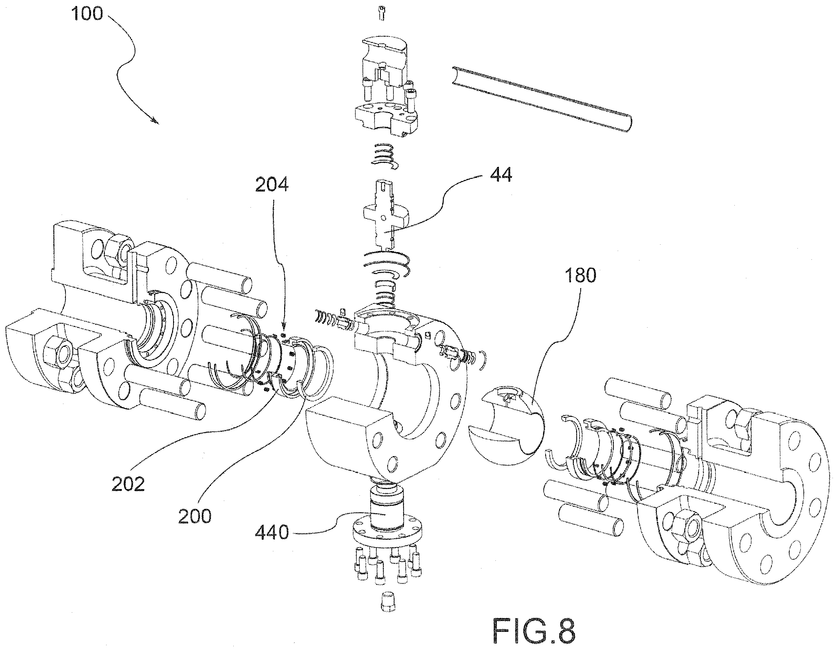

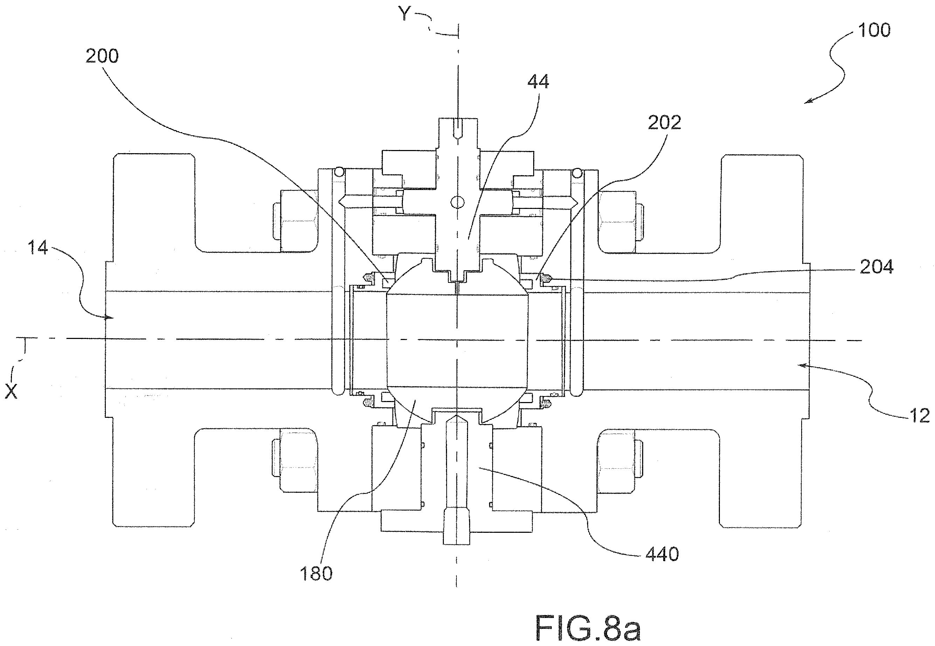

For example, figures 8 and 8a illustrate the application of the technical solution of the present invention to a "guided" ball intercepting valve 100 i.e. a valve where the ball obturator 180 is engaged, as well as by the command shaft 44, by a counter-shaft 440 aligned and opposite the command shaft. Shaft 44 and counter-shaft 440 ensure the continued alignment of the centre of the ball obturator 180 with the rotation axis Y of the command shaft. Consequently, the only movement that the ball obturator is able to perform is the rotation around the rotation axis Y.

In this embodiment, the seal on the ball obturator 180 is guaranteed for each of the inlet and outlet ducts, by a sealing ring 200, for example made of plastic, housed in a respective annular shape ring seat 202. The assembly of the sealing ring 200 and of the relative seat 202 is mounted between the ball obturator and the valve body 10 with the possibility of axial translation along the main axis X. In particular, on one side of the ring seat 202 opposite the ball obturator, an elastic means 204, for example a plurality of springs housed in respective spring seats made in the valve body 10, act, suitable to keep the sealing ring 200 pressed against the surface of the ball obturator 180.

The presence of the elastic means 204 acting on the sealing assembly ensures the seal even in the presence of a low fluid pressure acting on the ball obturator.

As the pressure increases, it pushes the sealing assembly against the ball obturator.

In the presence of high pressures, the bypass circuit described above facilitates the actuation of the command shaft 44 to rotate the ball obturator 180, even in the case of valves with a particularly large through diameter.

Each of the characteristics described as belonging to a possible embodiment may be realised independently of the other embodiments described.

## Claims

1. Intercepting valve of a fluid, comprising a valve body (10) in which an inlet duct (12), an outlet duct (14), and an obturator seat (16) are made between said inlet and outlet ducts, where in said obturator seat a valve obturator (18; 180) is placed, rotatable between a closed valve position, in which it prevents the passage of the fluid from said inlet duct to said outlet duct, and an open valve position, in which it places said inlet and outlet ducts in fluidic communication, the valve comprising a bypass duct (30) made in the valve body so as to fluidically connect the inlet duct and the outlet duct, a bypass obturator (32) rotatable between a closed position of said bypass duct and an open position of said bypass duct being placed in said bypass duct, the valve comprising a command element (40) suitable to cause a rotation of the valve obturator and of the bypass obturator, said command element being rotatable between a first position in which both the valve obturator and the bypass obturator are in the closed position, and a second position, in which the valve obturator is in the open position and the bypass obturator is in the closed position, passing through an intermediate position, in which the valve obturator is still in the closed position while the bypass obturator is in the open position, wherein the command element (40) comprises a rotatable command device (42) and a command shaft (44) which transmits the rotation of said command device to the valve obturator, the bypass obturator (32) being made in said command shaft (44) wherein said command shaft comprises an upper portion coupling to the command device , **characterised in that** the valve obturator is a ball obturator, **in that** the command shaft (44) has a lower end portion (442) having a substantially rectangular cross section housed in a shaft seat consisting of a recess (184) made in the valve obturator (18) and delimited by inclined walls, so that said end portion (442) is free to rotate in said recess (184) by an angle equal to the shift from the first position to the intermediate position, **in that** the command shaft is housed in a shaft seat (444) which delimits an intermediate portion (302) of the bypass duct, said intermediate portion of the bypass duct extending in a direction substantially orthogonal to the rotation axis (Y) of the command shaft, and **in that** said command shaft comprises an intermediate portion which forms the bypass obturator (32) and which is housed in said intermediate portion of the bypass duct, a transversal bypass passage (34) being made in said intermediate portion of the command shaft, the bypass obturator (32) being disc-shaped with its rotation axis coinciding with the rotation axis (Y) of the command element.

2. Valve according to the previous claim, wherein, in the passage from the first position to the intermediate position, the command element (40) causes the rotation of the bypass obturator (32) only.

3. Valve according to the previous claim, wherein the command element (40) is integral in rotation with the bypass obturator (32) and engages the valve obturator (18; 180) angularly only upon reaching the intermediate position.

4. Valve according to any of the previous claims, wherein the bypass duct (30) has a through cross-section of the fluid smaller than the through cross-section of the inlet duct (12).

5. Valve according to any of the previous claims, wherein said intermediate portion (302) of the bypass duct (30) communicates fluidically with an inlet portion (304) of the bypass duct made in the valve body and with an outlet portion (306) of the bypass duct made in the valve body.

6. Valve according to any of the previous claims, wherein said transversal bypass passage (34) is susceptible to rotate on a plane perpendicular to the rotation axis of the valve obturator (18).

7. Valve according to claim 5, wherein, when the command element is in the first and in the second position, the transversal bypass passage (34) is offset in relation to the inlet (304) and outlet (306) portions of the bypass duct.

## Patentansprüche

1. Abfangventil eines Fluids, umfassend einen Ventilkörper (10), in dem ein Einlasskanal (12), ein Auslasskanal (14) und ein Absperrorgansitz (16) zwischen dem Einlass- und dem Auslasskanal gefertigt sind, wobei in dem Absperrorgansitz ein Ventilabsperrorgan (18; 180) platziert ist, das drehbar zwischen einer geschlossenen Ventilstellung, in der es den Durchgang des Fluids von dem Einlasskanal zu dem Auslasskanal verhindert, und einer geöffneten Ventilstellung ist, in der es den Einlasskanal mit dem Auslasskanal in Fluidverbindung setzt, wobei das Ventil einen Bypass-Kanal (30) umfasst, der in dem Ventilkörper gefertigt ist, so dass der Einlasskanal und der Auslasskanal fluidartig verbunden werden, wobei ein Bypass-Absperrorgan (32), das drehbar zwischen einer geschlossenen Stellung des Bypass-Kanals und einer geöffneten Stellung des Bypass-Kanals ist, in dem Bypass-Kanal platziert wird, wobei das Ventil ein Steuerelement (40) umfasst, das geeignet ist, eine Drehung des Ventil-Absperrorgans und des Bypass-Absperrorgans zu verursachen, wobei das Steuerelement drehbar zwischen einer ersten Stellung, in der sich sowohl das Ventil-Absperrorgan als auch das Bypass-Absperrorgan in der geschlossenen Stellung befinden, und einer zweiten Stellung ist, in der sich das Ventil-Absperrorgan in der geöffneten Stellung und das Bypass-Absperrorgan in der geschlossenen Stellung befinden, wobei sie eine Zwischenstellung durchlaufen, in der das Ventil-Absperrorgan noch immer in der geschlossenen Stellung ist, während sich das Bypass-Absperrorgan in der geöffneten Stellung befindet, wobei das Steuerelement (40) eine drehbare Steuervorrichtung (42) und einen Steuerschaft (44) umfasst, der die Drehung der Steuervorrichtung zu dem Ventil-Absperrorgan überträgt, wobei das Bypass-Absperrorgan (32) in dem Steuerschaft (44) gefertigt ist, wobei der Steuerschaft einen oberen Abschnitt umfasst, der eine Kopplung zu der Steuervorrichtung herstellt, **dadurch gekennzeichnet, dass** das Ventil-Absperrorgan ein Kugel-Absperrorgan ist, dass der Steuerschaft (44) einen unteren Endabschnitt (442) aufweist, der einen im Wesentlichen rechtwinkligen Querschnitt aufweist, der in einem Schaftsitz untergebracht ist, der aus einer Aussparung (184) besteht, die in dem Ventil-Absperrorgan (18) gefertigt ist, und durch schräge Wände begrenzt ist, so dass der Endabschnitt (442) frei ist, in der Aussparung (184) um einen Winkel zu drehen, der gleich der Verschiebung von der ersten Stellung zur Zwischenstellung ist, dass der Steuerschaft in einem Schaftsitz (444) untergebracht ist, der eine Zwischenstellung (302) des Bypass-Kanals begrenzt, wobei sich der Zwischenabschnitt des Bypass-Kanals in einer Richtung im Wesentlichen rechtwinklig zur Drehachse (Y) des Steuerschafts erstreckt, und dass der Steuerschaft eine Zwischenstellung umfasst, die das Bypass-Absperrorgan (32) bildet, und die in der Zwischenstellung des Bypass-Kanals untergebracht ist, wobei ein in Querrichtung verlaufender Bypass-Durchgang (34) in der Zwischenstellung des Steuerschafts gefertigt ist, wobei das Bypass-Absperrorgan (32) scheibenförmig ist, und seine Drehachse mit der Drehachse (Y) des Steuerelements übereinstimmt.

2. Ventil nach dem vorhergehenden Anspruch, wobei in dem Durchgang von der ersten Stellung zur Zwischenstellung das Steuerelement (40) nur die Drehung des Bypass-Absperrorgans (32) verursacht.

3. Ventil nach dem vorherigen Anspruch, wobei das Steuerelement (40) mit dem Bypass-Absperrorgan (32) drehfest ist und nur bei Erreichen der Zwischenstellung winklig in das Ventil-Absperrorgan (18; 180) eingreift.

4. Ventil nach einem der vorherigen Ansprüche, wobei der Bypass-Kanal (30) einen Durchführungsquerschnitt des Fluids aufweist, der kleiner ist als der Durchführungsquerschnitt des Einlasskanals (12).

5. Ventil nach einem der vorhergehenden Ansprüche, wobei der Zwischenabschnitt (302) des Bypass-Kanals (30) in Fluidverbindung mit einem Einlassabschnitt (304) des Bypass-Kanals, der in dem Ventilkörper gefertigt ist, und mit einem Auslassalaschnitt (306) des Bypass-Kanals ist, der in dem Ventilkörper gefertigt ist.

6. Ventil nach einem der vorhergehenden Ansprüche, wobei der quer verlaufende Bypass-Durchgang (34) anfällig ist, auf einer Ebene zu drehen, die senkrecht zu der Drehachse des Ventil-Absperrorgans (18) ist.

7. Ventil nach Anspruch 5, wobei, wenn sich das Steuerelement in der ersten und in der zweiten Stellung befindet, der querverlaufende Bypass-Durchgang (34) in Bezug zu dem Einlass- (304) und dem Auslassabschnitt (306) des Bypass-Kanals versetzt ist.

## Revendications

1. Vanne de barrage d'un fluide, comprenant un corps de vanne (10) dans lequel une conduite d'entrée (12), une conduite de sortie (14) et un siège d'obturateur (16) sont disposés entre lesdites conduites d'entrée et de sortie, où dans ledit siège d'obturateur un obturateur de vanne (18 ; 180) est placé, pouvant pivoter entre une position de vanne fermée, dans laquelle il empêche le passage du fluide de ladite conduite d'entrée vers ladite conduite de sortie, et une position de vanne ouverte, dans laquelle il place lesdites conduites d'entrée et de sortie en communication fluidique, la vanne comprenant une conduite de dérivation (30) disposée dans le corps de vanne de manière à raccorder par voie fluidique la conduite d'entrée et la conduite de sortie, un obturateur de dérivation (32) pouvant pivoter entre une position fermée de ladite conduite de dérivation et une position ouverte de ladite conduite de dérivation étant placé dans ladite conduite de dérivation, la vanne comprenant un élément de commande (40) apte à provoquer une rotation de l'obturateur de vanne et de l'obturateur de dérivation, ledit élément de commande étant capable de pivoter entre une première position dans laquelle l'obturateur de vanne et l'obturateur de dérivation sont tous deux en position fermée, et une deuxième position, dans laquelle l'obturateur de vanne est en position ouverte et l'obturateur de dérivation est en position fermée, en passant par une position intermédiaire, dans laquelle l'obturateur de vanne est toujours en position fermée tandis que l'obturateur de dérivation est en position ouverte,
dans laquelle l'élément de commande (40) comprend un dispositif de commande rotatif (42) et un arbre de commande (44) qui transmet la rotation dudit dispositif de commande à l'obturateur de vanne, l'obturateur de dérivation (32) étant disposé dans ledit arbre de commande (44), ledit arbre de commande comprenant une partie supérieure couplée au dispositif de commande,
**caractérisée en ce que** l'obturateur de vanne est un obturateur à sphère, **en ce que** l'arbre de commande (44) comporte une partie d'extrémité inférieure (442) ayant une section transversale sensiblement rectangulaire logée dans un siège d'arbre constitué d'un évidement (184) réalisé dans l'obturateur de vanne (18) et délimité par des parois inclinées, de sorte que ladite partie d'extrémité (442) est libre de pivoter dans ledit évidement (184) d'un angle égal au décalage entre la première position et la position intermédiaire, **en ce que** l'arbre de commande est logé dans un siège d'arbre (444) qui délimite une partie intermédiaire (302) de la conduite de dérivation, ladite partie intermédiaire de la conduite de dérivation s'étendant dans une direction sensiblement orthogonale à l'axe de rotation (Y) de l'arbre de commande, et **en ce que** ledit arbre de commande comprend une partie intermédiaire qui forme l'obturateur de dérivation (32) et qui est logée dans ladite partie intermédiaire de la conduite de dérivation, un passage de dérivation transversal (34) étant disposé dans ladite partie intermédiaire de l'arbre de commande, l'obturateur de dérivation (32) étant en forme de disque avec son axe de rotation coïncidant avec l'axe de rotation (Y) de l'élément de commande.

2. Vanne selon la revendication précédente, dans laquelle, lors du passage de la première position à la position intermédiaire, l'élément de commande (40) provoque la rotation de l'obturateur de dérivation (32) uniquement.

3. Vanne selon la revendication précédente, dans laquelle l'élément de commande (40) pivote en même temps que l'obturateur de dérivation (32) et vient en prise avec l'obturateur de vanne (18 ; 180) angulairement uniquement lorsqu'il atteint la position intermédiaire.

4. Vanne selon l'une quelconque des revendications précédentes, dans laquelle la conduite de dérivation (30) comporte une section de passage du fluide plus petite que la section de passage de la conduite d'entrée (12).

5. Vanne selon l'une quelconque des revendications précédentes, dans laquelle ladite partie intermédiaire (302) de la conduite de dérivation (30) communique par voie fluidique avec une partie d'entrée (304) de la conduite de dérivation disposée dans le corps de vanne et avec une partie de sortie (306) de la conduite de dérivation disposée dans le corps de vanne.

6. Vanne selon l'une quelconque des revendications précédentes,
dans laquelle ledit passage de dérivation transversal (34) est susceptible de pivoter sur un plan perpendiculaire à l'axe de rotation de l'obturateur de vanne (18).

7. Vanne selon la revendication 5, dans laquelle, lorsque l'élément de commande est en première et en deuxième position, le passage de dérivation transversal (34) est décalé par rapport aux parties d'entrée (304) et de sortie (306) de la conduite de dérivation.
